(19)

Europäisches
Patentamt
European
Patent Office
Office européen
des brevets

(11) **EP 1 798 570 A2**

(12) **EUROPEAN PATENT APPLICATION**

(43) Date of publication:
   **20.06.2007 Bulletin 2007/25**

(51) Int Cl.:
   ***G01S 13/89*** *(2006.01)*

(21) Application number: **06255830.9**

(22) Date of filing: **14.11.2006**

(84) Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK YU**

(30) Priority: **16.12.2005 US 303294**

(71) Applicant: **Agilent Technologies, Inc.
   Santa Clara, CA 95051 (US)**

(72) Inventors:
   • **Baharav, Izhak
     Palo Alto, CA 94306 (US)**
   • **Corredoura, Paul L.
     Redwood City, CA 94062 (US)**

   • **Taber, Robert C.
     Palo Alto, CA 94301 (US)**
   • **Weems, William
     San Jose, CA 65148 (US)**
   • **Lee, Gregory S.
     Mountain View, CA 94043 (US)**
   • **Young, James E.
     La Honda, CA 94020 (US)**
   • **Neil, John M.
     Los Altos, CA 94024 (US)**

(74) Representative: **Jehan, Robert et al
   Williams Powell
   Morley House
   26-30 Holborn Viaduct
   London EC1A 2BP (GB)**

(54) **Stand off microwave imaging system and method**

(57)   A microwave imaging system (10) for performing standoff microwave imaging includes an antenna array (50) with a plurality of antenna elements (80), each capable of being programmed with a respective direction coefficient to direct microwave illumination toward a target (155) within a volume (160) that includes a standoff region, and each capable of being programmed with a respective additional direction coefficient to receive reflected microwave illumination reflected from the target (155). A processor (100) measures an intensity of the reflected microwave illumination to determine a value of a voxel within a microwave image of the volume (160). The processor (100) constructs the microwave image with a resolution sufficient to identify objects (150) within the standoff region.

*FIG. 1*

**Description**

The present invention relates to a microwave imaging system and method of performing standoff microwave imaging.

Surveillance systems commonly employ optical video cameras to monitor facilities. Historically, these cameras have transmitted analog video images of an area under surveillance to a security monitoring center for inspection and storage. In many facilities, analog video cameras are being replaced with digital cameras that detect and capture still images of events, such as the appearance of an intruder, a malfunction, or a fire within the area under surveillance. Digital cameras provide several advantages over analog video cameras. For example, digital cameras can be radio linked and battery powered to eliminate the need for the costly fixed infrastructure of video cables and power lines, making surveillance systems cheaper and easier to deploy.

However, digital cameras have limited sensitivity, and are not capable of imaging opaque or concealed items. For example, at a point-of-entry into a facility, such as a government building, school, airport or other structure, traditional analog or digital cameras are not able to identify concealed weapons or other contraband (e.g., explosives). Therefore, as a result of the need for improved surveillance systems, various microwave imaging systems have been proposed as alternatives to existing optical systems. Microwave radiation is generally defined as electromagnetic radiation having wavelengths between radio waves and infrared waves. Since microwave radiation is non-ionizing, it poses no known health risks to people at moderate power levels. In addition, over the spectral band of microwave radiation, most dielectric materials, such as clothing, paper, plastic and leather are nearly transparent. Therefore, microwave imaging systems have the ability to penetrate clothing to image items concealed by clothing.

At present, there are several microwave imaging techniques available. For example, one technique uses an array of microwave detectors (hereinafter referred to as "antenna elements") to capture either passive microwave radiation emitted by a target associated with the person or other object or reflected microwave radiation reflected from the target in response to active microwave illumination of the target. A two-dimensional or three-dimensional image of the person or other object is constructed by scanning the array of antenna elements with respect to the target's position and/or adjusting the frequency (or wavelength) of the microwave radiation being transmitted or detected.

Microwave imaging systems typically include transmit, receive and/or reflect antenna arrays for transmitting, receiving and/or reflecting microwave radiation to/from the object. Such antenna arrays can be constructed using traditional analog phased arrays or binary reflector arrays. In either case, the antenna array typically directs a beam of microwave radiation containing a number of individual microwave rays towards a point or area/volume in 3D space corresponding to a voxel or a plurality of voxels in an image of the object, referred to herein as a target. This is accomplished by programming each of the antenna elements in the array with a respective phase shift that allows the antenna element to modify the phase of a respective one of the microwave rays. The phase shift of each antenna element is selected to cause all of the individual microwave rays from each of the antenna elements to arrive at the target substantially in-phase. Examples of programmable antenna arrays are described in European Patent Application Nos. EP-A-1,662,612 and EP-A-1,662,611.

However, to maintain a desired resolution, the numerical aperture (size) of the antenna array is linear with distance. Thus, as the imaging distance increases, the aperture size and cost of the antenna array may become prohibitively high in many situations. In addition, imaging at large, standoff distances also necessarily increases the scanning volume of the system (i.e., the number of voxels to be scanned grows linearly with distance), which further increases the cost and computational complexity of the microwave imaging system.

The present invention seeks to provide improved microwave imaging.

According to an aspect of the present invention there is provided a microwave imaging system as specified in claim 1.

According to another aspect of the present invention there is provided a method of performing standoff microwave imaging as specified in claim 8.

The preferred embodiments can provide microwave imaging that is capable of performing standoff microwave imaging with sufficient resolution to identify objects of interest, such as contraband, in standoff regions. In addition, they can provide a microwave imaging system that is capable of performing standoff microwave imaging with reduced cost and computational complexity.

Embodiments of the present invention provide a microwave imaging system for performing standoff microwave imaging. The microwave preferred imaging system includes an antenna array with a plurality of antenna elements, each capable of being programmed with a respective direction coefficient to direct microwave illumination toward a target within a volume that includes a standoff region, and each capable of being programmed with a respective additional direction coefficient to receive reflected microwave illumination reflected from the target. A processor measures an intensity of the reflected microwave illumination to determine a value of a voxel within a microwave image of the volume. The processor constructs the microwave image with a resolution sufficient to identify objects of interest, such as contraband, within the standoff region.

In one embodiment, to minimize the size of the array, the microwave imaging system operates at a frequency necessary to produce the desired resolution in the standoff region. In a further embodiment, while operating at a higher frequency or while operating with an array of a size sufficient to produce the desired resolution, a sparse antenna array is provided, such that the plurality of antenna elements includes a first array of antenna elements arranged to direct a transmit beam of microwave illumination in a transmit beam pattern toward the target and a second array of antenna elements arranged to receive a receive beam of microwave illumination from the target in a receive beam pattern complementary to the transmit beam pattern. The voxel associated with the target is formed at an intersection of the transmit beam and the receive beam.

In another embodiment, to minimize the size of the volume, and hence the number of voxels in the microwave image, the microwave imaging system is augmented with an optical imaging system configured to capture an optical image of an object within the volume and to produce optical image data representing the optical image. From the optical image data, optical image information can be extracted for use by the processor to identify a region of interest within the volume that is associated with the object. The processor can further control the array to illuminate only targets within the region of interest to produce the microwave image with only that region of interest. In yet another embodiment, the number of voxels in the image can also be reduced by using a coarser resolution in the standoff region than in regions closer to the array.

Embodiments of the present invention are described below, by way of example only, with reference to the accompanying drawings, in which:

FIG. 1 is a pictorial representation of an exemplary microwave imaging system for standoff imaging, in accordance with embodiments of the present invention;

FIG. 2 is a schematic block diagram illustrating an exemplary microwave imaging system for standoff imaging, in accordance with embodiments of the present invention;

FIG. 3 is a schematic diagram illustrating an exemplary operation of an exemplary reflector antenna array for use in the microwave imaging system of the present invention;

FIG. 4 is a schematic diagram illustrating an exemplary operation of an exemplary transmissive antenna array for use in the microwave imaging system of the present invention;

FIG. 5 is a cross-sectional view of an exemplary passive antenna element for use in a reflective antenna array, in accordance with embodiments of the present invention;

FIG. 6 is a schematic diagram illustrating an exemplary active antenna element for use in an active transmit/receive antenna array, in accordance with embodiments of the present invention;

FIG. 7A is a schematic diagram of an exemplary sparse antenna array design, in accordance with embodiments of the present invention;

FIG. 7B is a pictorial representation of the microwave beam radiation pattern produced by the antenna array design shown in FIG. 7A;

FIG. 8 is a pictorial representation of an exemplary imaging system incorporating an optical (visible-light) imaging system with the microwave imaging system of the present invention;

FIG. 9 is a block diagram of an image processing system for augmenting a microwave imaging system with an optical imaging system, in accordance with embodiments of the present invention;

FIG. 10 is a pictorial representation of an exemplary operation of the microwave imaging system with variable-sized voxels, in accordance with embodiments of the present invention;

FIG. 11 is a flow chart illustrating an exemplary process for standoff microwave imaging, in accordance with embodiments of the present invention; and

FIG. 12 is a flow chart illustrating an exemplary process for implementing standoff microwave imaging, in accordance with embodiments of the present invention.

As used herein, the terms microwave radiation and microwave illumination each refer to the band of electromagnetic radiation having wavelengths between 0.3 mm and 30 cm, corresponding to frequencies of about 1 GHz to about 1,000 GHz. Thus, the terms microwave radiation and microwave illumination each include traditional microwave radiation, as well as what is commonly known as millimeter wave radiation. In addition, as used herein, the term "microwave imaging system" refers to an imaging system operating in the microwave frequency range, and the resulting images obtained by the microwave imaging system are referred to herein as "microwave images." Furthermore, as used herein, the term "standoff" refers to a distance between an imaging device and an object that is approximately equal to or greater than nine feet. In exemplary embodiments, the term "standoff" refers to a distance between an imaging device and an object of between 9 feet and 450 feet.

Referring now to FIG. I, there is illustrated an exemplary microwave imaging system 10 for performing standoff microwave imaging, in accordance with embodiments of the present invention. The microwave imaging system 10 can be used to provide ongoing surveillance to control a point-of-entry into a structure, monitor passers-by in an area (e.g.,

a hallway, a room or outside of a building), to monitor passers-by from a moving vehicle or to screen individual suspects remotely.

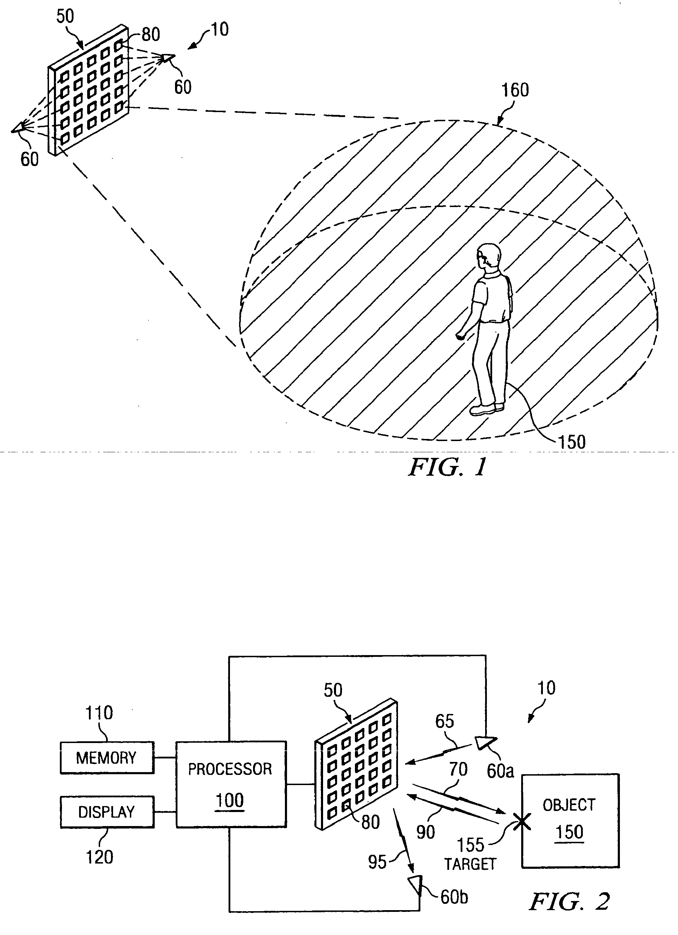

As can be seen in FIG. 1, the microwave imaging system 10 includes an imaging device in the form of an array 50 of antenna elements 80, each capable of transmitting, receiving and/or reflecting microwave radiation to capture a microwave image of a volume 160 addressable by the array 50 with sufficient resolution (i.e., the volume that can be resolved within some specified factor of the desired resolution). In FIG. 1, the volume 160 includes an object 150 (e.g., suitcase, human subject, as shown in FIG. 1, or any other item of interest). Each of the antenna elements 80 is programmable with a respective direction coefficient (e.g., a transmission coefficient or a reflection coefficient) to direct a beam of microwave radiation towards a target. As used herein, the term "target" refers to a point or area/volume in 3D space corresponding to a voxel or a plurality of voxels in a microwave image of the object 150. In addition, each of the antenna elements 80 is also programmable with an additional respective direction coefficient (e.g., a transmission coefficient or a reflection coefficient) to receive reflected microwave illumination reflected from the target.

In one embodiment, the array 50 is a passive programmable reflector array composed of reflective or transmissive antenna elements 80 that reflect or transmit microwave radiation to and/or from one or more microwave antennas 60. For example, each of the reflective or transmissive antenna elements 80 can be programmed with a respective direction coefficient to reflect or transmit microwave illumination emitted from one of the microwave antennas 60 towards the target. In addition, each of the reflective or transmissive antenna elements 80 can be programmed with an additional respective direction coefficient to reflect or transmit microwave illumination reflected from the target towards one of the microwave antennas 60. A single microwave antenna 60 can serve as both the source and receiver of microwave radiation, or separate microwave antennas 60 can be used for illuminating the array 50 and receiving reflected microwave illumination from the array 50, the latter being illustrated in FIG. 1.

In another embodiment, the array 50 is an active transmitter/receiver array composed of active antenna elements 80, each capable of producing and transmitting microwave radiation and each capable of receiving and capturing reflected microwave radiation. In this embodiment, microwave source/receive antennas 60 are not used, as the array 50 operates as the source of microwave radiation.

In operation, the array 50 emits microwave radiation over the volume 160, and receives reflected microwave illumination reflected from objects 150 within the illuminated volume 160 in order to capture a microwave image of that volume 160. Specifically, the microwave imaging system 10 captures a microwave image of the volume 160 addressable by the array 50 by scanning multiple targets within the volume 160 to measure the respective intensity of reflected microwave illumination from each of those targets. The measured intensity from each target represents a voxel within the microwave image of the volume 160. In an exemplary embodiment, the array 50 operates at a frequency that enables potentially millions of targets in a volume to be scanned per second.

To provide ongoing surveillance of the volume 160, the microwave imaging system 10 captures successive microwave images of the volume 160. For example, in one embodiment, the microwave imaging system 10 operates at a frame rate of approximately thirty frames per second. However, in other embodiments, the microwave imaging system 10 operates at a frame rate greater than or less than 30 frames per second, depending upon the desired image quality. Since the scanning frequency of the microwave imaging system 10 is orders of magnitude greater than the frame rate, any motion of objects 150 within the volume 160 during the capture of an image frame can be compensated for in software.

FIG. 2 is a schematic block diagram illustrating a simplified exemplary microwave imaging system 10, in accordance with embodiments of the present invention. In FIG. 2, the antenna array 50 includes reflecting antenna elements 80, each capable of being programmed with a respective reflection coefficient to reflect microwave illumination. Therefore, when a microwave source 60a transmits a beam of microwave illumination 65 towards the antenna array 50, the reflecting antenna elements 80 can be programmed to reflect microwave illumination 70 towards a target 155 on the object 150 being imaged. In addition, when reflected microwave illumination 90 reflected from the target 155 is received at the antenna array 50, the reflecting antenna elements 80 can be programmed to reflect microwave illumination 95 towards the microwave receiver 60b.

The microwave imaging system 10 further includes a processor 100, computer-readable medium 110 and a display 120. The processor 100 includes any hardware, software, firmware, or combination thereof for controlling the array 50 and processing the received microwave radiation reflected from the target 155 for use in constructing a microwave image of the object 150. For example, the processor 100 may include one or more microprocessors, microcontrollers, programmable logic devices, digital signal processors or other type of processing devices that are configured to execute instructions of a computer program, and one or more memories (e.g., cache memory) that store the instructions and other data used by the processor 100. The memory 110 includes any type of data storage device, including but not limited to, a hard drive, random access memory (RAM), read only memory (ROM), compact disc, floppy disc, ZIP® drive, tape drive, database or other type of storage device or storage medium.

The processor 100 operates to program the antenna array 50 to illuminate multiple targets 155 on the object 150. In exemplary embodiments, the processor 100 programs respective amplitude/phase delays or amplitude/phase shifts into each of the individual antenna elements 80 in the array 50 to illuminate each target 155 on the object 150. In addition, the processor 100 programs respective amplitude/phase delays or amplitude/phase shifts into each of the individual antenna elements 80 in the array 50 to receive reflected microwave illumination from each target 155 on the object 150. In embodiments using phase shifts, the programmed phase shifts can be either binary phase shifts or continuous phase shifts.

The processor 100 is further capable of constructing a microwave image of the object 150 using the intensity of the reflected microwave radiation captured by the array 50 from each target 155 on the object 150. For example, in embodiments in which the array 50 is a reflector array, the microwave receiver 60b is capable of combining the reflected microwave radiation reflected from each antenna element 80 in the array 50 to produce a value of the effective intensity of the reflected microwave radiation at the target 155. The intensity value is passed to the processor 100, which uses the intensity value as the value of a pixel or voxel corresponding to the target 155 on the object 150. In other embodiments in which the reflected microwave radiation represents the intensity of an area/volume of voxels, for each microwave image of a target 155 (area/volume in 3D space), the processor 100 measures a Fourier transform component of the desired image of the object 150. The processor 100 performs an inverse Fourier transform using the measured Fourier transform components to produce the image of the object 150.

The resulting microwave image of the object 150 can be passed from the processor 100 to the display 120 to display the microwave image. In one embodiment, the display 120 is a two-dimensional display for displaying three-dimensional microwave images of the object 150 or one or more one-dimensional or two-dimensional microwave images of the object 150. In another embodiment, the display 120 is a three-dimensional display capable of displaying three-dimensional microwave images of the object 150.

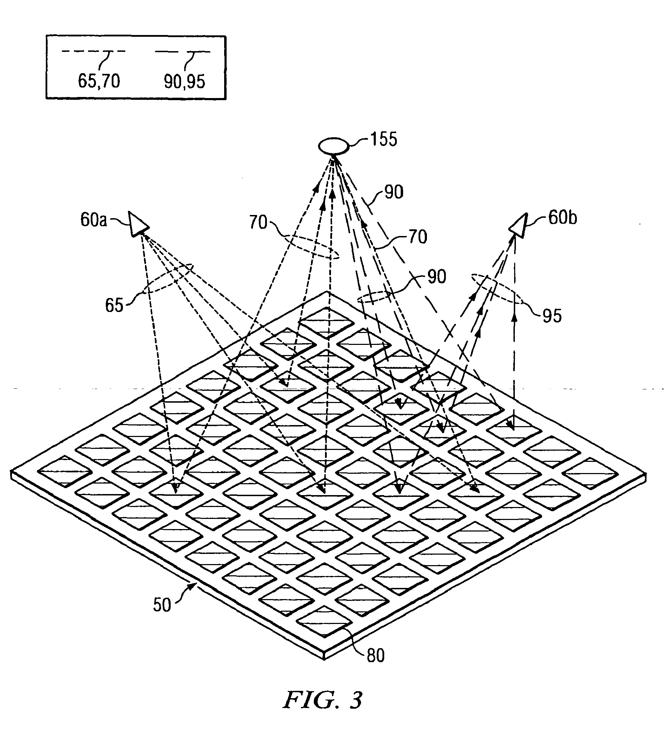

FIG. 3 is a schematic diagram of a top view of an exemplary array 50 for reflecting microwave radiation, in accordance with embodiments of the present invention. In FIG. 3, a source beam 65 of microwave radiation transmitted from a microwave source 60a is received by various antenna elements 80 in the array 50. The microwave source 60a can be any source sufficient for illuminating the array 50, including, but not limited to, a point source, a horn antenna or any other type of antenna. The antenna elements 80 within the array 50 are each programmed with a respective phase-shift to direct a transmit beam 70 of reflected microwave radiation towards a target 155. The phase-shifts are selected to create positive (constructive) interference between all of the microwave rays within the beam of reflected microwave radiation 70 at the target 155. Ideally, the phase-shift of each of the antenna elements 80 is adjusted to provide the same phase delay for each microwave ray of the reflected microwave radiation 70 from the source (antenna elements 80) to the target 155.

In a similar manner, as shown in FIG. 3, a reflect beam 90 of microwave radiation reflected from the target 155 and received at the array 50 can be reflected as a receive beam 95 of reflected microwave radiation towards a microwave receiver 60b. Again, the phase-shifts are selected to create positive (constructive) interference between all of the microwave rays within the beam of reflected microwave radiation 90 at the microwave receiver 60b. Although the microwave receiver 60b is shown at a different spatial location than the microwave source 60a, it should be understood that in other embodiments, the microwave source 60a can be positioned in the same spatial location as the microwave receiver 60b as a separate antenna or as part of the microwave receiver 60b (e.g., a confocal imaging system).

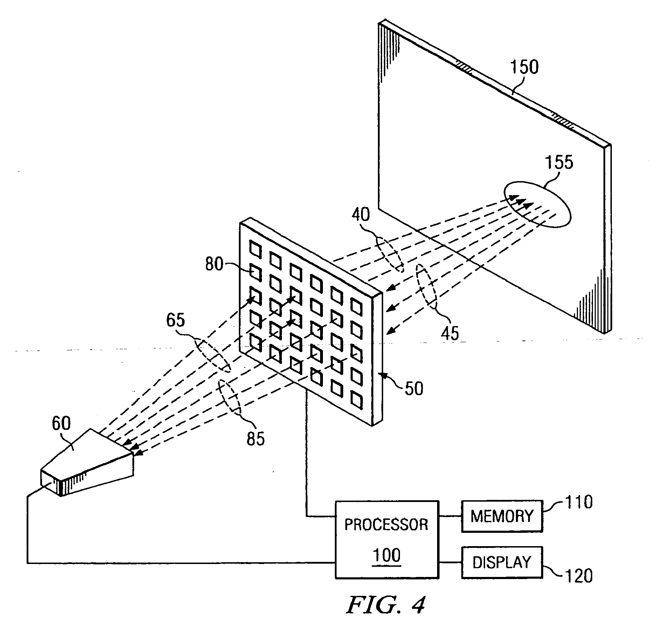

FIG. 4 is a schematic diagram of an exemplary handheld microwave imaging system 10 using a transmissive array 50 for directing microwave illumination, in accordance with embodiments of the present invention. In FIG. 4, the microwave antenna (e.g., horn) 60 functions as both a microwave source and a microwave receiver. The horn 60 is located behind the array 50 to illuminate the array 50 from behind (i.e., the array 50 is situated between the target 155 and the horn 60).

In operation, microwave illumination 65 transmitted from horn 60 is received by various antenna elements 80 in the array 50. The antenna elements 80 in array 50 are each programmed with a respective transmission coefficient to direct transmitted microwave illumination 40 towards a target 155 on the object 150. The transmission coefficients are selected to create positive interference of the transmitted microwave illumination 40 from each of the antenna elements 80 at the target 155. Reflected microwave illumination 45 reflected from the target 155 is received by various antenna elements 80 in the array 50. The antenna elements 80 in array 50 are again each programmed with a respective transmission coefficient to direct transmitted microwave illumination 85 towards horn 60.

The horn 60 combines the transmitted microwave radiation 85 from each antenna element 80 in the array 50 to produce a value of the effective intensity of the reflected microwave radiation 45 at the target 155. The intensity value is passed to the processor 100, which uses the intensity value as the value of a pixel or voxel corresponding to the target 155 on the object 150. The processor 100 constructs a microwave image of the object 150 using the intensity of the reflected microwave radiation 45 captured by the array 50 from each target 155 on the object 150. The resulting microwave image of the object 150 can be passed from the processor 100 to the display 120 to display the microwave image.

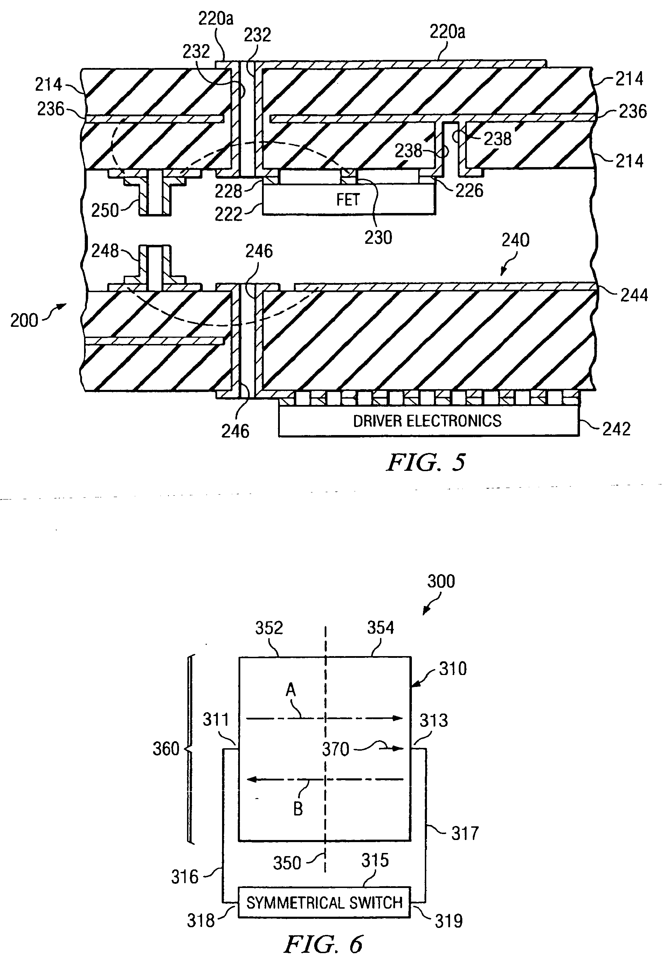

FIG. 5 illustrates a cross-sectional view of a reflecting antenna element 200 (corresponding to antenna element 80 in FIGs. 1-4) that operates to reflect electromagnetic radiation with varying phase depending on the impedance state of the antenna element 200. The reflecting antenna element 200 includes an antenna (patch antenna 220a) and a non-ideal switching device (surface mounted field effect transistor "FET" 222).

The reflecting antenna element 200 is formed on and in a printed circuit board substrate 214 and includes the surface mounted FET 222, the patch antenna 220a, a drain via 232, a ground plane 236 and a source via 238. The surface mounted FET 222 is mounted on the opposite side of the printed circuit board substrate 214 as the planar patch antenna 220a and the ground plane 236 is located between the planar patch antenna 220a and the surface mounted FET 222. The drain via 232 connects the drain 228 of the surface mounted FET 222 to the planar patch antenna 220a and the source via 238 connects the source 226 of the surface mounted FET 222 to the ground plane 236.

In exemplary embodiments, the reflector antenna array is connected to a controller board 240 that includes driver electronics. The example controller board 240 depicted in FIG. 5 includes a ground plane 244, a drive signal via 246, and driver electronics 242. The controller board 240 also includes connectors 248 that are compatible with connectors 250 of the reflector antenna array. The connectors 248 and 250 of the two boards can be connected to each other, for example, using wave soldering. It should be understood that in other embodiments, the FET 222 can be surface mounted on the same side of the printed circuit board substrate 214 as the planar patch antenna 220a. Additionally, the driver electronics 242 can be soldered directly to the same printed circuit board in which the reflecting antenna element 200 is built.

The patch antenna element 220a functions to reflect with more or less phase shift depending on the impedance level of the reflecting antenna element 300. The reflecting antenna element 200 has an impedance characteristic that is a function of the antenna design parameters. Design parameters of antennas include but are not limited to, physical attributes such as the dielectric material of construction, the thickness of the dielectric material, shape of the antenna, length and width of the antenna, feed location, and thickness of the antenna metal layer.

The FET 230 (non-ideal switching device) changes the impedance state of the reflecting antenna element 200 by changing its resistive state. A low resistive state (e.g., a closed or "short" circuit) translates to a low impedance. Conversely, a high resistive state (e.g., an open circuit) translates to a high impedance. A switching device with ideal performance characteristics (referred to herein as an "ideal" switching device) produces effectively zero impedance ($Z = 0$) when its resistance is at its lowest state and effectively infinite impedance ($Z = \infty$) when its resistance is at its highest state. As described herein, a switching device is "on" when its impedance is at its lowest state (e.g., $Z_{on} = 0$) and "off" when its impedance is at its highest state (e.g., $Z_{off} = \text{oo}$). Because the on and off impedance states of an ideal switching device are effectively $Z_{on} = 0$ and $Z_{off} = \infty$, an ideal switching device is able to provide the maximum phase shift without absorption of electromagnetic radiation between the on and off states. That is, the ideal switching device is able to provide switching between 0 and 180 degree phase states. In the case of an ideal switching device, maximum phase-amplitude performance can be achieved with an antenna that exhibits any finite non-zero impedance.

In contrast to an ideal switching device, a "non-ideal" switching device is a switching device that does not exhibit on and off impedance states of $Z_{on} = 0$ and $Z_{off} = \infty$, respectively. Rather, the on and off impedance states of a non-ideal switching device are typically, for example, somewhere between $0 < |Z_{on}| < |Z_{off}| < \infty$. However, in some applications, the on and off impedance states may even be $|Z_{off}| <= |Z_{on}|$. A non-ideal switching device may exhibit ideal impedance characteristics within certain frequency ranges (e.g., < 10 GHz) and highly non-ideal impedance characteristics at other frequency ranges (e.g., > 20 GHz).

Because the on and off impedance states of a non-ideal switching device are somewhere between $Z_{on} = 0$ and $Z_{off} = \infty$, the non-ideal switching device does not necessarily provide the maximum phase state performance regardless of the impedance of the corresponding antenna, where maximum phase state performance involves switching between 0 and 180 degree phase states. In accordance with one embodiment of the invention, the reflecting antenna element 200 of FIG. 5 is designed to provide optimal phase performance, where the optimal phase state performance of a reflecting antenna element is the point at which the reflecting element is closest to switching between 0 and 180 degree phase-amplitude states. In an exemplary embodiment, to achieve optimal phase state performance, the antenna element 200 is configured as a function of the impedance of the non-ideal switching device (FET 230). For example, the antenna element 200 can be designed such that the impedance of the antenna element 200 is a function of impedance characteristics of the FET 230.

Further, the antenna element 200 is configured as a function of the impedance of the non-ideal switching device (FET 230) in the on state, $Z_{on}$, and the impedance of the non-ideal switching device 230 in the off state, $Z_{off}$. In a particular embodiment, the phase state performance of the reflecting antenna element 200 is optimized when the antenna element 200 is configured such that the impedance of the antenna element 200 is conjugate to the square root of the impedance of the non-ideal switching device 230 when in the on and off impedance states, $Z_{on}$ and $Z_{off}$. Specifically, the impedance of the antenna element 200 is the complex conjugate of the geometric mean of the on and off impedance states, $Z_{on}$ and $Z_{off}$, of the corresponding non-ideal switching device 230. This relationship is represented as:

$$Z_{antenna}^{\bullet} = \sqrt{Z_{on} Z_{off}} \, , \qquad\qquad (1)$$

where ()* denotes a complex conjugate. The above-described relationship is derived using the well-known formula for the complex reflection coefficient between a source impedance and a load impedance. Choosing the source be-the antenna element 200 and the load to be the non-ideal switching device 230, the on-state reflection coefficient is set to be equal to the opposite of the off-state reflection coefficient to arrive at equation (1).

Designing the antenna element 200 to exhibit optimal phase-amplitude performance involves determining the on and off impedances, $Z_{on}$ and $Z_{off}$ of the particular non-ideal switching device that is used in the reflecting antenna element 200 (in this case, FET 230). Design parameters of the antenna element 200 are then manipulated to produce an antenna element 200 with an impedance that matches the relationship expressed in equation (1) above. An antenna element 200 that satisfies equation (1) can be designed as long as $Z_{on}$ and $Z_{off}$ are determined to be distinct values.

Another type of switching device, other than the surface mounted FET 230 shown in FIG. 5, that exhibits non-ideal impedance characteristics over the frequency band of interest is a surface mount diode. However, although surface mounted diodes exhibit improved impedance characteristics over the frequency band of interest compared to surface mounted FETs, surface mounted FETs are relatively inexpensive and can be individually packaged for use in reflector antenna array applications.

In a reflector antenna array that utilizes FETs as the non-ideal switching devices, the beam-scanning speed that can be achieved depends on a number of factors including signal-to-noise ratio, crosstalk, and switching time. In the case of a FET, the switching time depends on gate capacitance, drain-source capacitance, and channel resistance (i.e., drain-source resistance). The channel resistance is actually space-dependent as well as time-dependent. In order to minimize the switching time between impedance states, the drain of the FET is preferably DC-shorted at all times. The drain is preferably DC-shorted at all times because floating the drain presents a large off-state channel resistance as well as a large drain-source capacitance due to the huge parallel-plate area of the patch antenna. This implies that the antenna is preferably DC-shorted but one wishes the only "rf short" the antenna sees be at the source. Therefore, the additional antenna/drain short should be optimally located so as to minimally perturb the antenna.

It should be understood that other types of antennas can be used in the reflecting antenna element 200, instead of the patch antenna 220a. By way of example, but not limitation, other antenna types include dipole, monopole, loop, and dielectric resonator type antennas. In addition, in other embodiments, the reflecting antenna element 200 can be a continuous phase-shifted antenna element 200 by replacing the FETs 230 with variable capacitors (e.g., Barium Strontium Titanate (BST) capacitors). With the variable capacitor loaded patches, continuous phase shifting can be achieved for each antenna element 200, instead of the binary phase shifting produced by the FET loaded patches. Continuous phased arrays can be adjusted to provide any desired phase shift in order to steer a microwave beam towards any direction in a beam scanning pattern.

FIG. 6 illustrates an example of an active antenna element 300 (corresponding to an antenna element 80 in FIGs. 1-4) for use in an active transmit/receive or reflective array. The active antenna element 300 is a broadband binary phased antenna element including an antenna 310 connected to a respective switch 315. The switch 315 can be, for example, a single-pole double-throw (SPDT) switch or a double-pole double-throw (DPDT) switch. The operating state of the switch 315 controls the phase of the respective antenna element 300. For example, in a first operating state of the switch 315, the antenna element 300 may be in a first binary state (e.g., 0 degrees), while in a second operating state of the switch 315, the antenna element 300 may be in a second binary state (e.g., 180 degrees). The operating state of the switch 315 defines the terminal connections of the switch 315. For example, in the first operating state, terminal 318 may be in a closed (short circuit) position to connect feed line 316 between the antenna 310 and the switch 315, while terminal 319 may be in an open position. The operating state of each switch 315 is independently controlled by a control circuit (not shown) to individually set the phase of each antenna element 300.

As used herein, the term symmetric antenna 310 refers to an antenna that can be tapped or fed at either of two feed points 311 or 313 to create one of two opposite symmetric field distributions or electric currents. As shown in FIG. 6, the two opposite symmetric field distributions are created by using a symmetric antenna 310 that is symmetric in shape about a mirror axis 350 thereof The mirror axis 350 passes through the antenna 310 to create two symmetrical sides 352 and 354. The feed points 311 and 313 are located on either side 352 and 354 of the mirror axis 350 of the antenna 310. In one embodiment, the feed points 311 and 313 are positioned on the antenna 310 substantially symmetrical about the mirror axis 350. For example, the mirror axis 350 can run parallel to one dimension 360 (e.g., length, width, height, etc.) of the antenna 310, and the feed points 311 and 313 can be positioned near a midpoint 370 of the dimension 360. In FIG. 6, the feed points 311 and 313 are shown positioned near a midpoint 370 of the antenna 310 on each side 352 and 354 of the mirror axis 350.

The symmetric antenna 310 is capable of producing two opposite symmetric field distributions, labeled A and B. The magnitude (e.g., power) of field distribution A is substantially identical to the magnitude of field distribution B, but the phase of field distribution A differs from the phase of field distribution B by 180 degrees. Thus, field distribution A resembles field distribution B at $\pm$ 180° in the electrical cycle.

The symmetric antenna 310 is connected to the symmetric switch 315 via feed lines 316 and 317. Feed point 311 is connected to terminal 318 of the symmetric switch 315 via feed line 316, and feed point 313 is connected to terminal 319 of the symmetric switch 315 via feed line 317. As used herein, the term symmetric switch refers to either a SPDT or DPDT switch in which the two operating states of the switch are symmetric about the terminals 318 and 319.

For example, if in a first operating state of a SPDT switch, the impedance of a channel (termed channel $\alpha$) is 10$\Omega$ and the impedance of another channel (termed channel $\beta$) is 1k$\Omega$, then in the second operating state of the SPDT switch, the impedance of channel $\alpha$ is 1k$\Omega$ and the impedance of channel $\beta$ is 10$\Omega$. It should be understood that the channel impedances are not required to be perfect opens or shorts or even real. In addition, there may be crosstalk between the channels, as long as the crosstalk is state-symmetric. In general, a switch is symmetric if the S-parameter matrix of the switch is identical in the two operating states of the switch (e.g., between the two terminals 318 and 319).

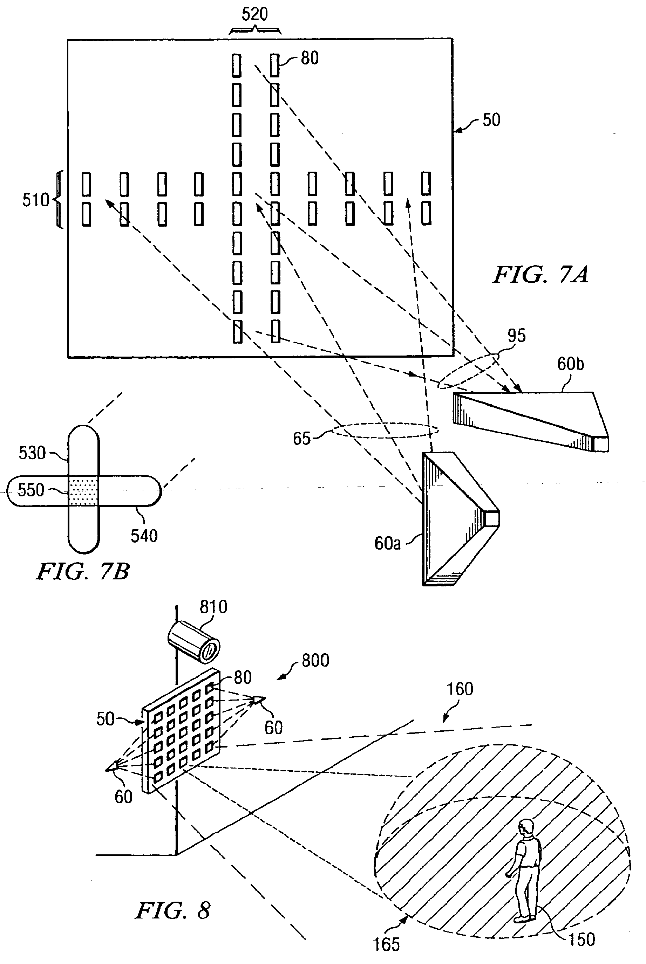

Referring now to FIGs. 7A and 7B, in order to maintain the desired resolution of the microwave image, the numerical aperture of the array 50 should be linear with distance. However, the aperture size and cost of the array 50 becomes prohibitively high as the imaging distance increases. For example, assuming a 1 meter by 1 meter array is used to image a target 1 meter away, to maintain the same resolution for a target 150 meters away, a 150 meter by 150 meter array is required, which may not be practical in many situations. Using higher frequencies in microwave imaging reduces the aperture size of the array 50 for a given distance. Thus, increasing the frequency of the microwave imaging system improves the resolution at larger distances without increasing the size of the array 50. However, the number of antenna elements 80 needed in the array 50 is quadratic with respect to the wavelength. As a result, increasing the frequency of the microwave imaging system 50 increases the number of antenna elements 80, and therefore increases the cost of the array 50.

To reduce the cost of producing an array 50 capable of performing standoff microwave imaging using a large array or a small array at higher frequencies, the number of antenna elements 80 in the array 50 can be reduced by providing complementary transmit and receive antenna arrays 510 and 520, respectively, in the array 50, as shown in FIG. 7A. The antenna elements 80 in the transmit array 510 and the receive array 520 are arranged in respective patterns. The pattern of antenna elements 80 in the transmit array 510 is complementary to the pattern of antenna elements 80 in the receive array 520. In particular, the pattern of antenna elements 80 in the transmit array 510 is orthogonal to the pattern of antenna elements 80 in the receive array 520. The complementary transmit and receive antenna arrays 510 and 520, respectively, generate complementary transmit and receive microwave beam patterns 530 and 540, respectively, as shown in FIG. 7B. The microwave image of the target is formed at the intersection 550 of the complementary transmit and receive microwave beam patterns 530 and 540, respectively. More specifically, the image signal produced is the volume-integrated cross product of the transmit and receive microwave beams 530 and 540, respectively. Such transmit/receive "cross hairs" enable resolution of small-radius features. Thus, deficiencies in the transmit beam 530 can be compensated by the receive beam 540, and vice-versa.

Turning now to the details of FIG. 7A, the transmit array 510 includes two rows of antenna elements, while the receive array 520 includes two columns of antenna elements. However, in general, the design shown in FIG. 7A can be represented as a rectangular m*M transmit array 510 pattern, where M >> m, and a rectangular N*n receive array 520 pattern, where N >> n. For example, if a tile is defined as consisting of n*m antenna elements, a dense square array of N*M antenna elements is composed of (N/m)*(M/n) tiles. In an array designed in accordance with FIG. 7A, there are only N+M-1 tiles, including an intersecting tile that is shared between the transmit and receive arrays 510 and 520, respectively. As shown in FIG. 7B, the transmit array 510 produces a transmit beam 530 in a vertical elliptical beam pattern, whereas the receive array 520 produces a receive beam 540 in a horizontal elliptical beam pattern. It should be understood that as used herein, "horizontal (vertical) elliptical pattern" means that focal spot of the beam is an ellipse, and the long axis of the ellipse is horizontal (vertical). The microwave image of the target is formed at the intersection 550 of the complementary transmit and receive microwave beam patterns 530 and 540, respectively.

The complementary transmit and receive arrays 510 and 520 shown in FIG. 7A are each composed of a vastly reduced number of antenna elements, such that the total antenna elements in the array 50 is significantly reduced, as compared to the originally dense array shown in FIG. 3. This reduction in element count directly translates into reduced cost. As opposed to dense arrays (such as the one shown in FIG. 3) where the cost of the array is proportional to the area (A) of the dense array, the cost of the complementary reduced-element count arrays 510 and 520 shown in FIG. 7A is proportional to only the square root of A, which achieves a significant cost savings. In addition, the volume addressable with high resolution (hereinafter termed the addressable field of view (AFOV)) is unchanged between the dense array of FIG. 3 and the complementary reduced-element count arrays 510 and 520 of FIG. 7A because the overall extent of the complementary arrays and the minimum pitch is the same as for the originally dense array.

If the transmit and receive arrays 510 and 520, respectively, are reflector arrays, as shown in FIG. 7A, the arrays 510 and 520 are fed wirelessly with microwave sources and microwave receivers designed to transmit and receive microwave beams to and from the arrays 510 and 520. In FIG. 7A, custom horns 60a and 60b are shown for feeding the reflector arrays 510 and 520 with elliptical microwave illumination beams or "fan beams" 65 and 95, respectively. Each custom horn 60a and 60b has a high aspect ratio radiating aperture and a lens insert (not shown) at the radiating aperture to provide for correct phase fronts. The microwave source 60a is a horn with a narrow but tall aperture, while the microwave receiver 60b is a horn with a wide but short aperture. It should be understood that other types of custom horn feeds are possible, instead of the particular horn feeds shown in FIG. 7A. For example, leaky waveguides, cylindrical lenses, cylindrical mirrors and other types of custom horns may be used with embodiments of the present invention. Regardless of the type of custom horn, the antenna pattern of the custom horn feed radiator should have a high aspect ratio between its beamwidths in the two principal planes of its main lobe (i.e., the feed generates an elliptical of fan-shaped beam that is nearly optimal for illuminating the transmit array 510 or receive array 520). In addition, the microwave source 60a and microwave receiver 60b should be distinct, non-collocated radiators due to the complementary aspect ratio of the horns 60a and 60b.

However, it should be understood that in other embodiments, the microwave source 60a and microwave receiver 60b may be collocated radiators. In addition, it should be understood that in other embodiments, the transmit and receive arrays 510 and 520, respectively, may be transmission arrays, in which the horns 60a and 60b are located behind the array 50, as shown in FIG. 4, to illuminate the transmit and receive arrays 510 and 520, respectively, from behind (i.e., the arrays 510 and 520 are situated between the target and the horns 60a and 60b). Furthermore, it should be understood that in other embodiments, hybrid designs are possible where one of the arrays 510 or 520 is a reflector array illuminated in front and the other array 510 or 520 is a transmission array illuminated from behind.

Referring now to FIG. 8, imaging at standoff distances not only potentially increases the size and/or cost of the array, but also necessarily increases the scanning volume of the system (i.e., the number of voxels to be scanned grows linearly with distance). Therefore, in addition to or in lieu of using a sparse (complementary transmit/receive) antenna array, the microwave imaging system can be included within a "bi-modal" imaging system 800 that augments the microwave imaging system with an optical imaging system. As used herein, the term "optical imaging system" refers to an imaging system operating in the visible light or near IR frequency range, and the resulting images obtained by the optical imaging system are referred to as "optical images" in order to differentiate these images from microwave images obtained by the microwave imaging system.

The optical imaging system includes a camera 810 for receiving reflected light from the object 150 to capture an optical image of the object 150. The reflected light is directed by a lens (not shown) to a sensor (not shown) within the camera 810. In one embodiment, the sensor includes a plurality of pixels for capturing the optical image of the object 150 and producing optical image data representing the optical image. The optical imaging system may also include a light source (not shown) for illuminating the object 150 with light. The light source can be any suitable source of visible or near IR light. For example, the light source can include one or more light emitting elements, such as one or more point light sources, one or more collimated or structured light sources, one or more arrays of light sources, or any other combination of light sources suitable for use in the optical imaging system.

The optical image data is used by the microwave imaging system in capturing a microwave image of the object 150. For example, in one embodiment, the optical image data is used to identify a spatial region of interest 165 (i.e., data points) within the volume 160 addressable by the microwave imaging system. The identified data points corresponding to the spatial region of interest can be used to direct microwave radiation to the spatial region of interest 165.

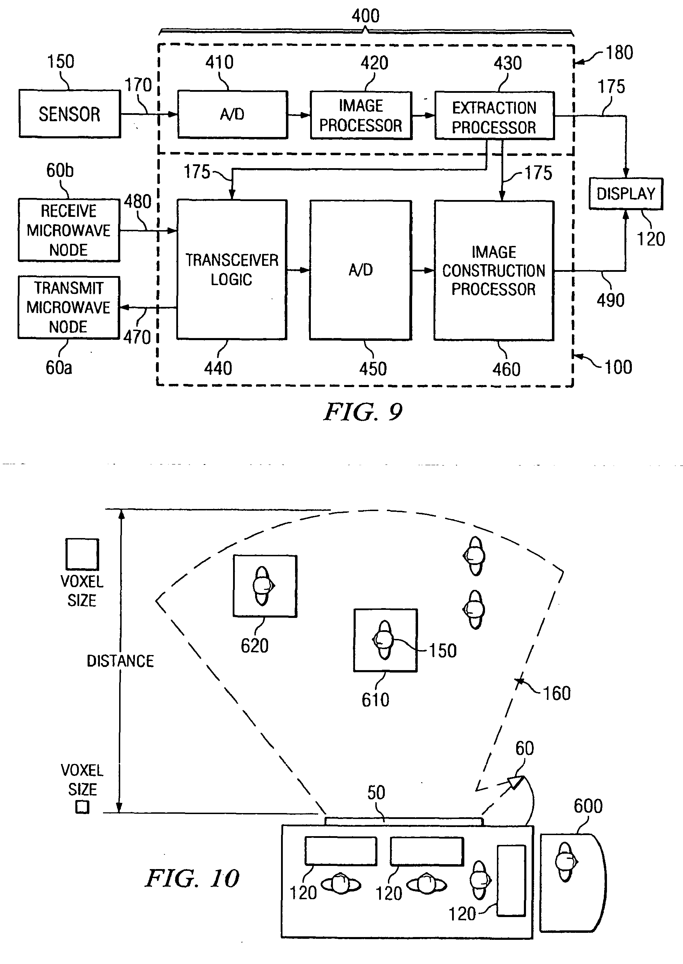

FIG. 9 is a block diagram of an image processing system 400 in which a microwave imaging system is augmented with an optical imaging system, in accordance with embodiments of the present invention. The image processing system 400 includes optical image processor 180 and microwave image processor 100. The optical image processor 180 includes image processor 420 and extraction processor 430. In one embodiment, image processor 420 and extraction processor 430 are ASICs or FPGA circuits configured to perform the functions described below. In another embodiment, image processor 420 and extraction processor 430 are combined in a general-purpose processor that executes algorithms to perform the functions described below.

The optical image processor 180 receives from sensor 150 within camera 810 (shown in FIG. 8) image data 170 representing an optical image. It should be understood that if there are multiple cameras, each camera provides a separate optical image to the optical image processor 180. In addition, depending on the light source used, the optical image processor 180 may further need to obtain information concerning the illumination pattern of the light source.

The image data 170 is converted from analog to digital by A/D converter 410 and passed to image processor 420 that processes the digital image data 170. For example, if the sensor 150 is a color sensor incorporating a color filter array, the image processor 420 can demosaic the image. Demosaicing is a process by which missing color values for each pixel location are interpolated from neighboring pixels. There are a number of demosaicing methods known in the art today. By way of example, but not limitation, various demosaicing methods include pixel replication, bilinear interpolation and median interpolation. Other types of processing that the image processor 420 can perform include noise filtering and image enhancement.

Extraction processor 430 is connected to receive the processed image data from image processor 420, and operates to extract optical image information 175 from the processed image data. There are a number of fast and simple known algorithms that can be used to extract the optical image information 175 from the image data 170. For example, in one embodiment, extraction processor 430 extracts the 3D surface of an object using an image construction algorithm for three-dimensional images. An example of an image construction process for three-dimensional images is described in co-pending and commonly assigned U.S. Application for Patent, Serial No. 10/392,758, in which an illumination gradient is used to spatially vary the intensity and/or spectral characteristics of the reflected illumination from the object in order to determine surface gradients at spatial locations on the surface of the object. The surface gradients are then used to construct a three-dimensional image of the object. Other three-dimensional image construction processes include laser triangulation, stereoscopic imaging, structured light and photometric stereo. For example, various three-dimensional image construction processes are described in Horn et al., "Toward Optimal Structured Light Patterns," IEEE Proceedings International Conference on Recent Advances in 3-D Digital Imaging and Modeling, Ottowa, Ontario, Canada, May 12-15, 1997, pp. 28-35 and Beraldin et al., "Optimized Position Sensors for Flying-Spot Active Triangulation System," IEEE Proceedings International Conference on Recent Advances in 3-D Digital Imaging and Modeling, Banff, Albertta, Canada, October 6-10, 2003, pp. 29-36.

In another embodiment, extraction processor 430 extracts features of the object that are of interest. It should be understood that as used herein, the phrase "features of the object" includes measurements of the object, components on a surface of or within the object or other indicia of the object. In further embodiments, extraction processor 430 extracts any other information from the image data 170 that is desired.

The optical image information 175 is output by the extraction processor 430 to the microwave processor 100 for use in constructing the microwave image. The optical image information 175 is also transmitted from the extraction processor 430 to the display 120. Microwave processor 100 includes transceiver logic 440, A/D converter 450 and image construction processor 460. In one embodiment, transceiver logic 440 and image construction processor 460 are ASICs or FPGA circuits configured to perform the functions described below. In another embodiment, transceiver logic 440 and image construction processor 460 are combined in a general-purpose processor that executes algorithms to perform the functions described below.

As is understood, the transceiver logic 440 receives microwave measurements 480 representing the intensity of microwave illumination reflected from a target associated with the object from a receive microwave node (e.g., microwave receiver 60b). The microwave measurements 480 are converted from analog to digital by A/D converter 450 and passed to image construction processor 460 to construct a microwave image of the object. The image construction processor 460 produces microwave image data 490 representing the microwave image of the object and transmits the microwave image data 490 to the display 120.

In accordance with embodiments of the present invention, the optical image information 175 output by the extraction processor 430 is received at either one or both of the transceiver logic 440 and the image construction processor 460. In one embodiment, the optical image information 175 identifies data points corresponding to spatial regions of interest associated with the object. In one implementation embodiment, the transceiver logic 440 uses the optical image information 175 to provide transmit instructions 470 to the transmit microwave node (e.g., microwave source 60a) to direct the microwave radiation to the spatial regions (or regions) of interest. In another implementation embodiment, the image construction processor 460 uses the optical image information 175 to construct the microwave image using the measurements 480 corresponding to the identified data points.

With the optical image information 175, the actual volume occupied by the object being interrogated can be identified to determine what data points in the volume really need to be solved for. Thus, in the discrete-sampling of the space, only relevant data points need to be addressed. Depending on the maximum allowed volume to analyze, and the minimum that can be encountered, the computational load can be significantly reduced.

Referring now to FIG. 10, another option for reducing the number of voxels in the microwave image is to use variable-sized voxels. FIG. 10 illustrates an exemplary operation of the microwave imaging system using variable-sized voxels. In FIG. 10, the antenna array 50 is mounted on a vehicle 600, such as a law enforcement or military vehicle. In embodiments in which the array 50 is a reflector array, one or more microwave antennas 60 are also mounted on the vehicle and positioned to illuminate the array 50. The array 50 emits microwave radiation over volume 160 in order to capture a microwave image of objects 150 within the volume 160. The microwave image can be displayed on one or more displays 120 located inside the vehicle.

However, as can be seen in FIG. 10, as the distance from the array 50 increases, the size of the voxel also increases. Therefore, the resolution of the microwave image is coarser in standoff regions (e.g., region 620) than in regions (e.g., region 610) closer to the array 50. In security applications, the amount of damage produced by a fixed explosive or other weapon depends upon the distance. As a result, coarser resolution at larger distances with finer resolution at smaller distances may be sufficient to identify security threats.

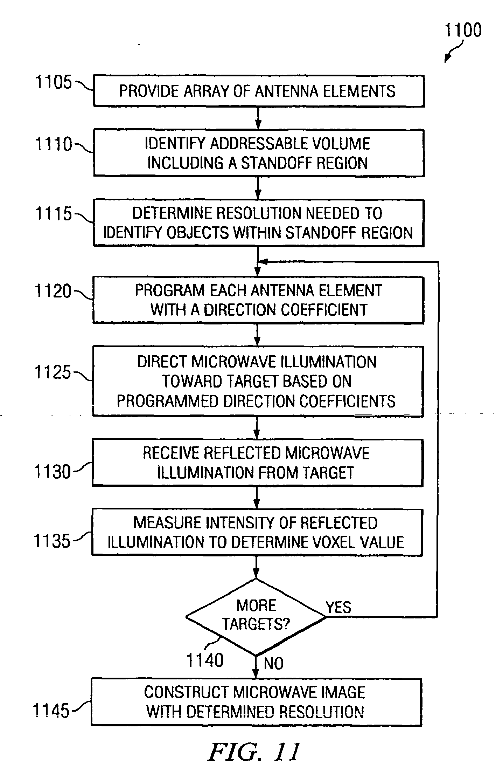

FIG. 11 is a flow chart illustrating an exemplary process 1100 for standoff microwave imaging in security applications, in accordance with embodiments of the present invention. Initially, at blocks 1105 and 1110, an array of programmable antenna elements is provided for imaging an addressable volume that includes a standoff region. At block 1115, the resolution needed to identify objects, such as contraband, within the standoff region is determined. Thereafter, at block 1120, each of the individual antenna elements within the array is programmed with a respective direction coefficient to direct microwave illumination towards a target within the volume at block 1125. Microwave illumination reflected from the target is received at the array at block 1130 by programming each of the individual antenna elements within the array with a respective additional direction coefficient.

At block 1135, the intensity of reflected microwave illumination reflected from the target is measured to determine a voxel value in the microwave image of the volume. If there are more targets to be scanned in the current microwave image, at block 1140, the antenna elements are again programmed at blocks 1120-1135 to measure the intensity of reflected microwave illumination reflected from other targets on the object. If the current scan is complete, at block 1145, a microwave image of the volume is constructed with the determined resolution from all of the measured voxel values.

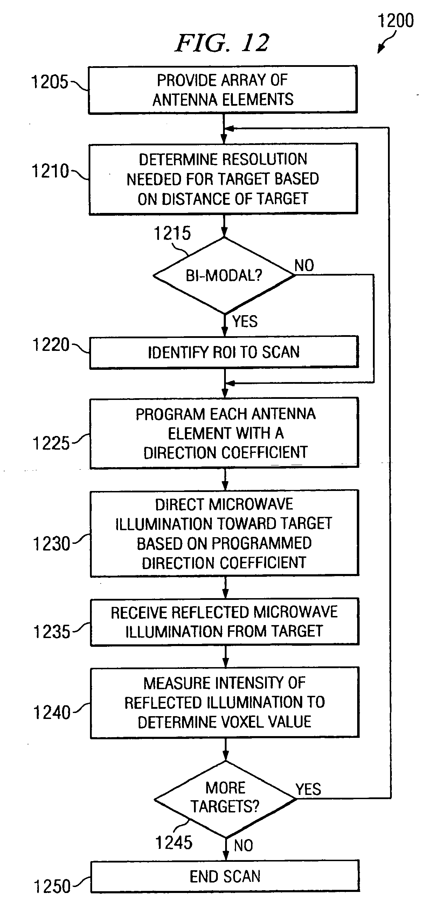

FIG. 12 is a flow chart illustrating an exemplary process for implementing standoff microwave imaging, in accordance with embodiments of the present invention. Initially, at block 1205, an array of programmable antenna elements is provided for imaging an addressable volume that includes a standoff region. In embodiments in which a higher frequency is required to identify objects, such as contraband, at standoff targets within the addressable volume, the array can be a sparse antenna array to reduce the number of antenna elements in the array. In an exemplary embodiment, the sparse array can be formed by including complementary transmit and receive antenna arrays within the array.

At block 1210, the resolution needed to identify contraband at a target within the volume is determined based on the distance of the target from the array. At block 1215, a determination is made whether the microwave imaging system is augmented with an optical image system to capture a microwave image of the target with sufficient resolution while minimizing the scanning volume. If such a bi-modal imaging system is present, at block 1220, a region of interest (ROI) within the volume addressable by the microwave imaging system is identified by the optical imaging system.

Thereafter, even if a bi-modal imaging system is not present, at block 1225, each of the individual antenna elements within the array is programmed with a respective direction coefficient to direct microwave illumination towards a target within the volume (or ROI) at block 1230. Microwave illumination reflected from the target is received at the array at block 1235 by programming each of the individual antenna elements within the array with a respective additional direction coefficient.

At block 1240, the intensity of reflected microwave illumination reflected from the target is measured to determine a voxel value in the microwave image of the object. If there are more targets to be scanned in the current microwave image, at block 1245, the resolution of the other targets is again determined to enable variable resolution at block 1210, and then the antenna elements are again programmed at blocks 1225-1240 to measure the intensity of reflected microwave illumination reflected from other targets in the volume (or ROI). If there are no more targets in the microwave image, at block 1250, the current scan is complete and a microwave image of the volume (or ROI) is constructed with the determined resolution from all of the measured voxel values.

The disclosures in United States patent application No. 11/303,294, from which this application claims priority, and in the abstract accompanying this application are incorporated herein by reference.

## Claims

1. A microwave imaging system for performing standoff microwave imaging, comprising:

   an antenna array (50) including a plurality of antenna elements (80), each capable of being programmed with a respective direction coefficient to direct microwave illumination toward a target (155) within a volume (160) that includes a standoff region, said antenna elements (80) being capable of being programmed with a respective additional direction coefficient to receive reflected microwave illumination reflected from said target (155); and a processor (100) operable to measure an intensity of said reflected microwave illumination to determine a value of a voxel within a microwave image of said volume (160), and wherein said processor (100) is operable to construct said microwave image with a resolution sufficient to identify objects (150) within said standoff region.

2. A system according to claim 1, wherein said processor (100) is operable to construct said microwave image of said volume by scanning multiple targets (155) within said volume (160) to measure the respective intensity of reflected microwave illumination from each of said multiple targets (155).

3. A system according to claim 1 or 2, including:

   a display (120) operably coupled to said processor (100) to display said microwave image of said volume (160), wherein said display (120) is further operable to display successive microwave images at a predetermined frame rate.

4. A system according to any preceding claim, wherein said system operates at a frequency necessary to produce said resolution.

**5.** A system according to any preceding claim, wherein said plurality of antenna elements includes:

a first array (510) of antenna elements (80) arranged to direct a transmit beam (530) of microwave illumination in a transit beam pattern toward said target (155), and

a second array (520) of antenna elements (80) arranged to receive a receive beam (540) of microwave illumination from said target (155) in a receive beam pattern complementary to said transmit beam pattern (530); wherein said voxel is formed at an intersection (550) of said transmit beam (530) and said receive beam (540).

**6.** A system according to any preceding claim, including:

an optical imaging system (800) configured to capture an optical image of an object (150) within said volume (160), to produce optical image data representing the optical image and to extract optical image information (175) from the optical image data;

wherein said processor (100) is operable to use said optical image information (175) to identify a region of interest (165) within said volume (160) that is associated with said object (150) and to control said array (50) to illuminate only targets (155) within said region of interest (165) to produce said microwave image with only said region of interest (165).

**7.** A system according to any preceding claim, wherein said resolution of said microwave image in said standoff region is coarser than an additional resolution of said microwave image in a region having a distance closer to said array (50) than said standoff region.

**8.** A method of performing standoff microwave imaging, including the steps of:

providing (1105) an antenna array including a plurality of antenna elements;

programming (1120) each of said antenna elements with a respective direction coefficient to direct (1125) microwave illumination toward a target within a volume that includes a standoff region;

receiving (1130) reflected microwave illumination reflected from said target;

measuring (1135) an intensity of said reflected microwave illumination to determine a value of a voxel within a microwave image of said volume; and

constructing (1145) said microwave image with a resolution sufficient to identify objects within said standoff region.

**9.** A method according to claim 8, wherein said step of providing (1105) said plurality of antenna elements includes:

providing a first array of antenna elements arranged to direct a transmit beam of microwave illumination in a transmit beam pattern toward said target, and

providing a second array of antenna elements arranged to receive a receive beam of microwave illumination from said target in a receive beam pattern complementary to said transmit beam pattern;

and wherein said voxel is formed at an intersection of said transmit beam and said receive beam.

**10.** A method according to claim 7, 8, or 9, including the steps of:

capturing an optical image of an object within said volume;

producing optical image data representing the optical image;

extracting optical image information from the optical image data;

using said optical image data to identify (1220) a region of interest within said volume that is associated with said object; and

controlling said array to illuminate only targets within said region of interest to produce said microwave image of said region of interest.

**11.** A method according to claim 7, 8, 9 or 10, wherein said constructing step includes:

constructing said microwave image with said resolution in said standoff region being coarser than an additional resolution of said microwave image in a region having a distance closer to said array than said standoff region.

*FIG. 1*

*FIG. 2*

FIG. 3

*FIG. 4*

*FIG. 5*

*FIG. 6*

*FIG. 7A*

*FIG. 7B*

*FIG. 8*

400

150    170    410    420    430         180
                                                175
SENSOR →    A/D →  IMAGE →  EXTRACTION
              PROCESSOR   PROCESSOR

                                              DISPLAY

60b                    175            175
                                                120
RECEIVE   480
MICROWAVE →  TRANSCEIVER →  A/D →  IMAGE
NODE         LOGIC              CONSTRUCTION
                                PROCESSOR
TRANSMIT                                   490
MICROWAVE ←
NODE      470
60a                  440        450        460    100

*FIG. 9*

VOXEL
SIZE

DISTANCE
                                              620
                                              150
                                              610

                                              160

                                              60
VOXEL
SIZE                                          600
                    50
                    120   120   120

*FIG. 10*

1100

1105 — PROVIDE ARRAY OF ANTENNA ELEMENTS

1110 — IDENTIFY ADDRESSABLE VOLUME
INCLUDING A STANDOFF REGION

1115 — DETERMINE RESOLUTION NEEDED TO
IDENTIFY OBJECTS WITHIN STANDOFF REGION

1120 — PROGRAM EACH ANTENNA ELEMENT
WITH A DIRECTION COEFFICIENT

1125 — DIRECT MICROWAVE ILLUMINATION
TOWARD TARGET BASED ON
PROGRAMMED DIRECTION COEFFICIENTS

1130 — RECEIVE REFLECTED MICROWAVE
ILLUMINATION FROM TARGET

1135 — MEASURE INTENSITY OF REFLECTED
ILLUMINATION TO DETERMINE VOXEL VALUE

MORE
TARGETS?    YES

1140      NO

1145 — CONSTRUCT MICROWAVE IMAGE
WITH DETERMINED RESOLUTION

*FIG. 11*

*FIG. 12*

1200

1205 — PROVIDE ARRAY OF ANTENNA ELEMENTS

1210 — DETERMINE RESOLUTION NEEDED FOR TARGET BASED ON DISTANCE OF TARGET

1215 — BI-MODAL? — NO

YES

1220 — IDENTIFY ROI TO SCAN

1225 — PROGRAM EACH ANTENNA ELEMENT WITH A DIRECTION COEFFICIENT

1230 — DIRECT MICROWAVE ILLUMINATION TOWARD TARGET BASED ON PROGRAMMED DIRECTION COEFFICIENT

1235 — RECEIVE REFLECTED MICROWAVE ILLUMINATION FROM TARGET

1240 — MEASURE INTENSITY OF REFLECTED ILLUMINATION TO DETERMINE VOXEL VALUE

MORE TARGETS? — YES

1245 — NO

1250 — END SCAN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1662612 A
- EP 1662611 A
- US 392758 A
- US 11303294 B

**Non-patent literature cited in the description**

- **HORN et al.** Toward Optimal Structured Light Patterns. *IEEE Proceedings International Conference on Recent Advances in 3-D Digital Imaging and Modeling,* 12 May 1997, 28-35
- **BERALDIN et al.** Optimized Position Sensors for Flying-Spot Active Triangulation System. *IEEE Proceedings International Conference on Recent Advances in 3-D Digital Imaging and Modeling, Banff,* 06 October 2003, 29-36